# EUROPEAN PATENT APPLICATION

(11) **EP 4 224 352 A1**
(43) Date of publication of application: **09.08.2023**
(21) Application number: 22155180.7
(22) Date of filing: 04.02.2022
(51) Int. Cl.: G06F 30/15, G06F 30/17, F16H 57/00, G06F 111/20, G06F 111/04

(54) **A METHOD FOR CONFIGURING A DRIVELINE FOR A VEHICLE**

(71) Applicant: VOLVO TRUCK CORPORATION, 405 08 Göteborg (SE)
(72) Inventor: PIHL, Claes, 433 75 Jonsered (SE)
(74) Representative: Valea AB

(57) **Abstract**

The present invention relates to a method performed by a computer for configuring a driveline (12) for a vehicle (10), the driveline (12) comprising a plurality of component types (18, 18', 20, 22, 24, 30) adapted to operate together so as to produce propulsion power.

The method comprises:
- determining a set of reference working points ({RWP₁, ...., RWPₘ}) for the driveline (12) on the basis of data indicative of driving operations that the vehicle (10) is intended to carry out, each reference working point (RWPᵢ) being associated with an intended reference speed request as well as an associated intended reference torque request for the driveline (12), and
- determining a set of critical working points ({CWP₁, ..... CWPₙ}) for the driveline (12), each critical working point (CWPⱼ) being associated with an intended critical speed request as well as an associated intended critical torque request wherein the intended critical torque request is greater than an intended average torque request for the driveline (12),

The method further comprises establishing a set of driveline models ({DM₁, ...., DMₚ}) for the driveline (12), each driveline model (DMₖ) comprising a unique selection of component entities for the component types (18, 18', 20, 22, 24, 30) comprised in the driveline (12) such that each driveline model (DMₖ) in the set of driveline models is different from the other driveline models in the set of driveline models ({DM₁, ...., DMₚ}).

The method further comprises setting the component types (18, 18', 20, 22, 24, 30) of the driveline to equal the unique selection of component entities for the component types (18, 18', 20, 22, 24, 30) corresponding to the driveline model (DMₖ) in the set of driveline models ({DM₁, ...., DMₚ}) which:
- is determined to be able to operate in accordance with each critical working point (CWPⱼ) in the set of critical working points ({CWP₁, ...., CWPₙ}), and
- is associated with a driveline model specific reference measure (RMₖ), related to the operation of the driveline model in each reference working point (RWPᵢ) of the set of reference working points ({RWP₁, ...., RWPₘ}), being deemed more preferred than the driveline model specific reference measure (RMₖ) associated with at least a subset of the other driveline models.

## Description

### TECHNICAL FIELD

The present invention relates to a method performed by a computer for configuring a driveline for a vehicle. Moreover, the present invention relates to a computer program comprising program code means. Additionally, the present invention relates to a computer readable medium.

The invention can be applied in heavy-duty vehicles, such as trucks, buses and construction equipment. Although the invention will be described with respect to a truck, the invention is not restricted to this particular vehicle, but may also be used in other vehicles such as articulated haulers, backhoe loaders and seagoing vessels such as boats.

### BACKGROUND

A vehicle is generally furnished with a driveline in order to ensure that the vehicle can be propelled in a desired manner. The driveline generally comprises a plurality of different component types adapted to operate together so as to produce propulsion power. Quite often, the vehicle's driveline and the operation thereof are associated with relatively large costs. In spite of the above circumstances, a driveline of a vehicle is often selected from one or more standard drivelines offered by a vehicle supplier.

In view of the above, it would be desired to improve the manner by which a suitable driveline is determined for a vehicle.

### SUMMARY

An object of the invention is to provide a method performed for configuring a driveline for a vehicle, which method results in that an appropriate driveline is arrived at.

The object is achieved by a method according to claim 1.

As such, the present invention relates to a method performed by a computer for configuring a driveline for a vehicle. The driveline comprises a plurality of component types adapted to operate together so as to produce propulsion power.

The method comprises:
- determining a set of reference working points for the driveline on the basis of data indicative of driving operations that the vehicle is intended to carry out, each reference working point being associated with an intended reference speed request as well as an associated intended reference torque request for the driveline, and
- determining a set of critical working points for the driveline, each critical working point being associated with an intended critical speed request as well as an associated intended critical torque request, wherein the intended critical torque request is greater than an intended average torque request for the driveline.

Moreover, the method further comprises establishing a set of driveline models for the driveline. Each driveline model comprises a unique selection of component entities for the component types comprised in the driveline such that each driveline model in the set of driveline models is different from the other driveline models in the set of driveline models.

The method further comprises setting the component types of the driveline to equal the unique selection of component entities for the component types corresponding to the driveline model in the set of driveline models which:
- is determined to be able to operate in accordance with each critical working point in the set of critical working points, and
- is associated with a driveline model specific reference measure, related to the operation of the driveline model at each reference working point of the set of reference working points, being deemed more preferred than the driveline model specific reference measure associated with at least a subset of the other driveline models.

The method according to the present invention implies that a driveline may be configured which not only is suitable for the reference working points for the driveline, but which is also able to operate in accordance with each critical working point in the set of critical working points.

As such, using the method according to the present invention, it is possible to arrive at a driveline that can meet critical operating requirements, and which also is able to operate in an appropriate manner under relatively common operating conditions. As such, instead of configuring a driveline with an aim to meet only critical operating requirements, or alternatively, to operate in a desired manner during relatively normal operating conditions only, the method according to the present invention implies that a driveline is arrived at that addresses both the above requirements.

Optionally, the set of reference working points is representative of the driving operations during at least 50%, preferably at least 70%, more preferred at least 80%, of the intended operation time of the vehicle. As such, the set of reference working points may be representative for a relatively large portion of the intended operation time of the vehicle.

Optionally, the driveline model specific reference measure is indicative of the energy consumption associated with the operation of the driveline model in each reference working point of the set of reference working points and wherein the method comprises setting the component types of the driveline to equal the unique selection of component entities for the component types corresponding to the driveline model in the set of driveline models which is associated with a lower energy consumption than at least a plurality of driveline models in the set of driveline models which is determined to be able to operate in accordance with each critical working point in the set of critical working points.

The above implies that a driveline configuration that may result in an appropriately low energy consumption.

Preferably, the method comprises setting the component types of the driveline to equal the unique selection of component entities for the component types corresponding to the driveline model in the set of driveline models which is associated with the lowest energy consumption amongst driveline models in the set of driveline models which is determined to be able to operate in accordance with each critical working point in the set of critical working points. This also implies that a driveline configuration that may result in an appropriately low energy consumption.

Optionally, the driveline model specific reference measure is indicative of a cost associated with the driveline model at each reference working point of the set of reference working points and wherein the method comprises setting the component types of the driveline to equal the unique selection of component entities for the component types corresponding to the driveline model in the set of driveline models which is associated with a lower cost than at least a plurality of driveline models in the set of driveline models which is determined to be able to operate in accordance with each critical working point in the set of critical working points.

The above implies a driveline configuration that may result in an appropriately low cost associated with the vehicle.

Preferably, the method comprises setting the component types of the driveline to equal the unique selection of component entities for the component types corresponding to the driveline model in the set of driveline models which is associated with the lowest cost amongst driveline models in the set of driveline models which is determined to be able to operate in accordance with each critical working point in the set of critical working points. This also implies a driveline configuration that may result in an appropriately low cost associated with the vehicle.

Optionally, the cost associated with the driveline model comprises a sum of:
- cost of energy consumption associated with the operation of the driveline model in each reference working point of the set of reference working points, and
- costs associated with manufacturing the driveline model.

Using a sum such as the one indicated above for determining the cost associated with the driveline model implies that the method arrives at a driveline configuration that results in an appropriately low total cost for purchasing and operating a vehicle with the driveline. For instance, the use of a sum such as the one indicated above implies that in at least some cases, it may be beneficial to use a driveline that is relatively expensive to manufacture if the energy consumption is lower than other less expensive driveline configurations. This may be even more relevant if the vehicle hosting the driveline is expected to be used often during its lifecycle.

Optionally, the step of determining a driveline model specific reference measure associated with the operation of the driveline model in each reference working point of the set of reference working points comprises associating each reference working point with an expected frequency of occurrence on the basis of data indicative of driving operations that the vehicle is intended to carry out.

By virtue of the above, it is possible to obtain an relatively accurate representation of the intended operation of the vehicle adapted to host the driveline to be configured.

Optionally, the driveline model specific reference measure associated with the operation of the driveline model in each reference working point of the set of reference working points is determined by performing the following for each reference working point of the set of reference working points:
- determining a driveline model specific reference sub-measure associated with the reference working point, and
- multiplying the driveline model specific reference sub-measure with the associated expected frequency of occurrence in order to obtain a driveline model specific reference sub-measure product,
wherein the driveline model specific reference measure is the sum of the driveline model specific reference sub-measure products.

Optionally, the driveline model specific reference sub-measure is indicative of the energy consumption associated with the operation of the driveline model at the reference working point.

Optionally, the driveline model specific reference sub-measure is indicative of the cost associated with the operation of the driveline model at the reference working point.

Optionally, the plurality of component types adapted to operate together so as to produce propulsion power comprises one or more of the following component types: a propulsion unit, a gearbox, a rear axle and one or more wheels.

Optionally, a ratio between the intended reference speed request and an intended average speed request for the driveline is in the range of 0.6 - 1.4, preferably in the range of 0.8 - 1.2, for each reference working point in the set of reference working points.

Optionally, a ratio between the intended critical torque request and intended average torque request for the driveline is at least 2, preferably at least 3, for each critical working point in the set of critical working points.

Optionally, each reference working point in the set of reference working points is determined on the basis of information comprising at least an intended speed and an intended cargo load of the vehicle adapted to host the driveline.

Optionally, each reference working point in the set of reference working points has a single operation condition for the driveline. This implies that the driveline model specific reference measure may be determined in a time efficient manner, e.g. using a static analysis approach for each reference working point in the set of reference working points.

Optionally, the set of reference working points consists of less than seven, preferably less than five, more preferred less than three, reference working points.

Optionally, the set of critical working points consists of less than seven, preferably less than five, more preferred less than three, critical working points.

Optionally, the vehicle is a ground vehicle, preferably the vehicle is a commercial ground vehicle such as a truck.

A second aspect of the present invention relates to a computer program comprising program code means for performing the method of the first aspect of the present invention when the program is run on a computer.

A third aspect of the present invention relates to a computer readable medium carrying a computer program comprising program code means for performing the method of the first aspect of the present invention when the program is run on a computer.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic side view of a vehicle;
Fig. 2 is a schematic top view of a driveline, and
Fig. 3 is a flowchart illustrating an embodiment of a method of the present invention.

### DETAILED DESCRIPTION OF EXAMPLE EMBODIMENTS OF THE INVENTION

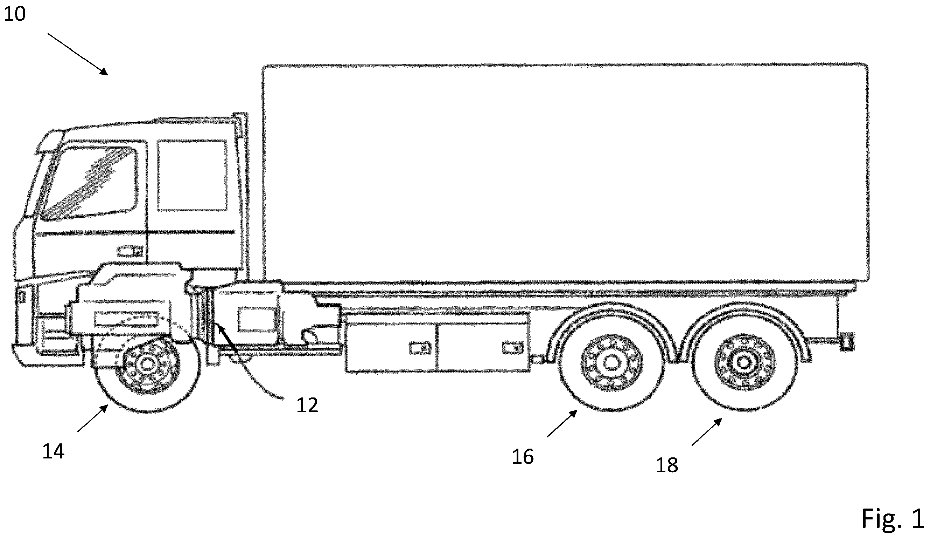

Fig. 1 is a schematic side view of a vehicle 10. The vehicle comprises a driveline 12 adapted to propel the vehicle 10. As may be gleaned from Fig. 1, the vehicle 10 comprises a set of wheels 14, 16, 18. The Fig. 1 vehicle 10 is a ground vehicle. In fact, the Fig. 1 vehicle 10 is truck which can be regarded as an example of a commercial ground vehicle. However, it is also envisaged that the method according to the present invention may be employed for drivelines for other types of vehicles, such as boats (not shown).

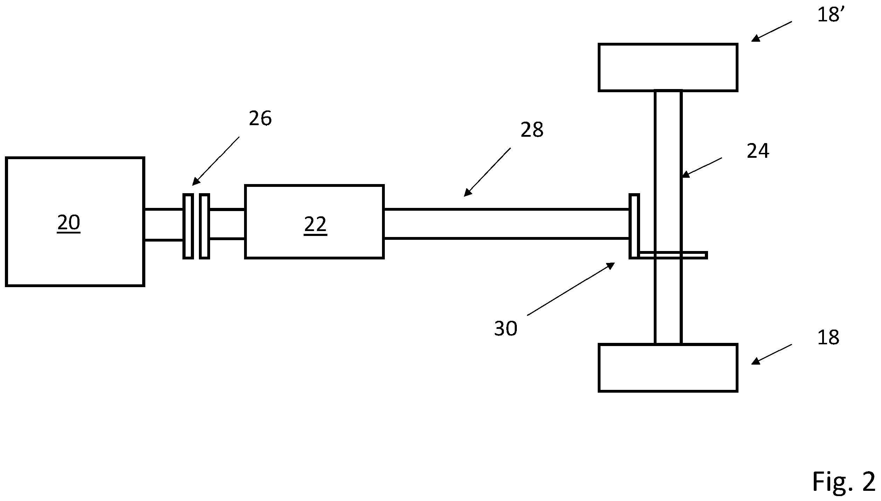

Fig. 2 is a schematic top view of an implementation of a driveline 12 of a vehicle (not shown in Fig. 1). The implementation of the driveline 12 illustrated in Fig. 2 comprises a propulsion unit 20, a gearbox 22, a rear axle 24 and one or more wheels 18, 18'.

Purely by way of example, the propulsion unit 20 may comprise, or be constituted by, an internal combustion engine. However, it is also envisaged that the propulsion unit may comprise, or be constituted by, an electric motor or a hybrid propulsion assembly that comprises an internal combustion engine and an electric motor.

In the Fig. 2 implementation, the propulsion unit 20 is mechanically connected to a gearbox 22. Purely by way of example, and as indicated in Fig. 2, the propulsion unit 20 may be mechanically connected to the gearbox 22 via a clutch 26.

The gearbox 22 is in turn mechanically connected to a rear axle 24. In the Fig. 2 implementation, the gearbox 22 is connected to a propeller shaft 28 which in turn is connected to the rear axle 24 via a final gearing assembly 30. Purely by way of example, the final gearing assembly 30 may comprise a differential (not shown).

The rear axle 24 is in turn connected to one or more wheels 18, 18'. In the Fig. 2 implementation, the rear axle 24 is fixedly connected to two wheels 18, 18'. However, in other implementations, the rear axle 24 may be connected to more than two wheels 18, 18'. Purely by way of example, in implementations of the driveline 12, the rear axle 24 may be connected to four wheels (not shown).

Moreover, the Fig. 2 implementation of the driveline 12 has a single rear axle 24. However, other implementations of the driveline 12 may comprise more axles, such as one or more front axles (not shown in Fig. 2) or one ore more additional rear axles (not shown in Fig. 2), each one of which being propelled by the propulsion unit 20. Alternatively, implementations of the driveline 12 may comprise a plurality of axles (not shown) and a plurality of propulsion units (not shown) wherein each propulsion unit is adapted to propel one or more of the axles forming the plurality of axles.

Irrespective of the implementation of the driveline 12, as has been intimated hereinabove, the driveline 12 comprises a plurality of component types adapted to operate together so as to produce propulsion power. Again, with reference to Fig. 2, the component types may for instance comprise a propulsion unit 20, a gearbox 22, a rear axle 24 and one or more wheels 18, 18'. For each one of the component types, one or more different component entities may be selected. For instance, using the propulsion unit 20 unit as an example of a component type, different propulsion unit entities with different maximum power capabilities may be used as a propulsion unit in a driveline 12. Similar reasoning can be used for the other component types forming part of the driveline 12.

As may be realized from the above, it may be possible to generate a plurality of different driveline configurations with different component entity combinations. As such, it would be desirable to identify a driveline configuration that is appropriate for an intended vehicle 10, in particular in view of an intended operation of the vehicle 10.

As such, the present invention relates to a method performed by a computer 32 for configuring a driveline 12 for a vehicle 10. As has been mentioned above, the driveline comprises a plurality of component types 18, 18', 20, 22, 24, 30 adapted to operate together so as to produce propulsion power.

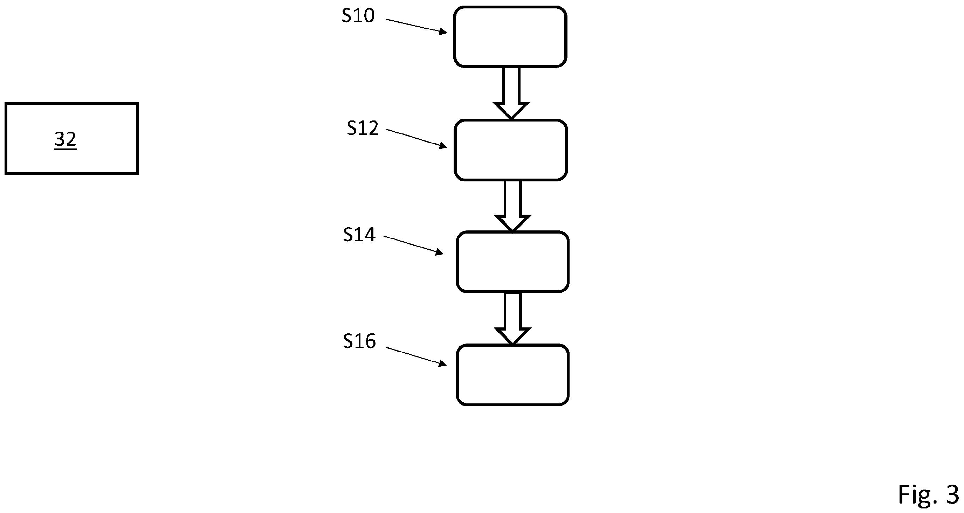

To this end, reference is made to Fig. 3 schematically illustrating an embodiment of the computer 32 and also illustrating a flowchart for an embodiment of the method in accordance with the present invention. It should be noted that the Fig. 3 flowchart is only intended to serve as example illustration of a method embodiment of the present invention and that other method embodiments may comprise additional features and may also carry out the method features in another order than what is presented in Fig. 3.

As such, an embodiment of the method according to the present invention comprises a feature S10 of determining a set of reference working points {RWP₁, ...., RWPₘ} for the driveline 12 on the basis of data indicative of driving operations that the vehicle is intended to carry out. Each reference working point RWPᵢ is associated with an intended reference speed request as well as an associated intended reference torque request of the vehicle 10.

Purely by way of example, the intended reference speed request as well as an associated intended reference torque request of the vehicle 10 may be related to, or even be equal to, the intended reference speed request as well as an associated intended reference torque request of the one or more wheels 18, 18' forming part of the driveline 12.

As a nonlimiting example, each reference working point RWPᵢ in the set of reference working points {RWP₁, ...., RWPₘ} may be determined on the basis of information comprising at least an intended speed and an intended cargo load of the vehicle 10 adapted to host the driveline 12. As such, though purely by way of example, a reference working point RWPᵢ may be determined on the basis of the following conditions: "the vehicle is loaded to a certain fraction of its maximum load capacity and is driven at a certain speed". An example of the above conditions may for instance be the following: "the vehicle is loaded to 80% of its maximum load capacity and is driven at a speed of 70km/h".

Generally, each reference working point RWPᵢ may be determined on the basis of information indicative of the how the vehicle 10 hosting the driveline 12 is intended to be operated. For instance, if the vehicle 10 hosting the driveline 12 is intended to replace an existing vehicle (not shown), relevant reference points RWPᵢ may be generated using data that have been collected by or from the existing vehicle, for instance data relating to speeds and cargo loads of the existing vehicle.

A reference working point may preferably be related to a normal operating condition of the vehicle, viz an operating condition that the vehicle is expected to operate in relatively often. As such, though purely by way of example, a ratio between the intended reference speed request and an intended average speed request for the driveline may be in the range of 0.6 - 1.4, preferably in the range of 0.8 - 1.2, for each reference working point RWPᵢ in the set of reference working points {RWP₁, ...., RWPₘ}.

As another non-limiting example indicative of the concept of relating a reference working point to a normal operating condition of the vehicle, the set of reference working points {RWP₁, ...., RWPₘ} may be representative of the driving operations during at least 50%, preferably at least 70%, more preferred at least 80%, of the intended operation time of the vehicle 10.

Purely by way of example, each reference working point RWPᵢ in the set of reference working points {RWP₁, ...., RWPₘ} may have a single operating condition for the driveline. As such, each reference working point RWPᵢ may be fully represented by an intended reference speed request as well as an associated intended reference torque request of the vehicle 10. However, it is also envisaged that embodiments of the present invention may use at least one reference working point RWPᵢ that represents a range of intended reference speed requests. Purely by way of example, such a range of intended reference speed requests may be presented as a speed request distribution (not shown).

Moreover, as a non-limiting example, the set of reference working points {RWP₁, ...., RWPₙ} may consist of less than seven, preferably less than five, more preferred less than three, reference working points RWPᵢ.

The embodiment of the method of the present invention further comprises a feature S12 of determining a set of critical working points {CWP₁, ...., CWPₙ} for the driveline 12, each critical working point CWPⱼ being associated with an intended critical speed request as well as an associated intended critical torque request. The intended critical torque request is greater than an intended average torque request for the driveline.

As indicated by its name, a critical working point CWPⱼ may represent an operating point of the driveline 12 which should be obtainable by the driveline 12 but is not expected to occur very often. Purely by way of example, a ratio between the intended critical torque request and intended average torque request for the driveline is at least 2, preferably at least 3, for each critical working point CWPⱼ in the set of critical working points {CWP₁, ...., CWPₙ}.

As a non-limiting example, the set of critical working points {CWP₁, ...., CWPₙ} may consist of less than seven, preferably less than five, more preferred less than three, critical working points CWPⱼ.

Purely by way of example, a critical working point CWPⱼ may be determined in response to an expected condition, e.g. an expected critical condition, of the vehicle 10.

Purely by way of example, a critical working point CWPⱼ may be determined on the basis of the following conditions: "the vehicle is loaded to a certain fraction of its maximum load capacity and is driven at a certain speed up a hill having a certain inclination". An example of the above conditions may for instance be the following: "the vehicle is loaded to 80% of its maximum load capacity and is driven at a speed of 40 km/h up a hill having a 4% inclination".

As another non-limiting example, a critical working point CWPⱼ may be determined on the basis of the following conditions: "the vehicle is loaded to a certain fraction of its maximum load capacity and has a certain acceleration on a flat ground". An example of the above conditions may for instance be the following: "the vehicle is loaded to 80% of its maximum load capacity and has an acceleration of 2.5 m/s² on a flat ground".

A further non-limiting example of a critical working point CWPⱼ may relate to a startability criterion. As such, when the condition of the vehicle 10 hosting the driveline 12 is changed from stationary to moving, the clutch 26 may be subjected to thermal loads and a critical working point CWPⱼ may comprise that an intended critical torque request for starting the vehicle does not result in excessive thermal loads imparted on the clutch 26 or other components of the driveline 12.

As may be realized from the above, each one of the set of reference working points {RWP₁, ...., RWPₘ} and the set of critical working points {CWP₁, ...., CWPₙ} may be determined in a plurality of different ways. However, irrespective of how these sets are determined, the method embodiment of the present invention comprises a feature S14 of establishing a set of driveline models {DM₁, ...., DMₚ} for the driveline 12. Each driveline model DMₖ comprises a unique selection of component entities for the component types 18, 18', 20, 22, 24, 30 comprised in the driveline 12 such that each driveline model DMₖ in the set of driveline models {DM₁, ...., DMₚ} is different from the other driveline models in the set of driveline models {DM₁, ...., DMₚ}. Put differently, each driveline model DMₖ has a unique combination of component entities for the component types 18, 18', 20, 22, 24, 30.

Moreover, the embodiment of the present invention comprises a feature S16 of setting the component types of the driveline 12 to equal the unique selection of component entities for the component types corresponding to the driveline model DMₖ in the set of driveline models {DM₁, ...., DMₚ} which:
- is determined to be able to operate in accordance with each critical working point CWPⱼ in the set of critical working points {CWP₁, ...., CWPₙ}, and
- is associated with a driveline model specific reference measure RMₖ, related to the operation of the driveline model DMₖ in each reference working point RWPᵢ in the set of reference working points {RWP₁, ...., RWPₘ}, being deemed more preferred than the driveline model specific reference measure RM associated with at least a subset of the other driveline models {DM₁, ...., DMₚ}.

It should be noted that although feature S16 has been illustrated as being subsequent to feature S14 in Fig. 3, it should be noted that features S14 and S16 may be implemented in a plurality of different ways in embodiments of the method of the present invention.

In a first non-limiting implementation, which is also indicated in the Fig. 3 example, a set of driveline models {DM₁, ...., DMₚ} may firstly be generated. Moreover, for each driveline model DMₖ in the set of driveline models {DM₁, ...., DMₚ} the following may be determined:
- whether or not the driveline model DMₖ is determined to be able to operate in accordance with each critical working point CWPⱼ in the set of critical working points {CWP₁, ...., CWPₙ}, and
- a driveline model specific reference measure RMₖ, related to the operation of the driveline model DMₖ in each reference working point RWPᵢ in the set of reference working points {RWP₁, ...., RWPₘ}.

Thereafter, the driveline model specific reference measures RM_{g}, ... RMₗ for the driveline models DM_{g}, ..., DMₗ determined to be able to operate in accordance with each critical working point CWPⱼ in the set of critical working points {CWP₁, ...., CWPₙ} are assessed and a preferred, optionally the most preferred, model specific reference measure RMₖ is identified and therefrom the associated driveline model DMₖ is identified.

As an alternative to the above implementation, in a second non-limiting implementation, a set of driveline models {DM₁, ...., DMₚ} may firstly be generated. Moreover, for each driveline model DMₖ in the set of driveline models {DM₁, ...., DMₚ} the following is performed:
- determining whether or not the driveline model DMₖ is determined to be able to operate in accordance with each critical working point CWPⱼ in the set of critical working points {CWP₁, ...., CWPₙ}, and
- only if the driveline model DMₖ is determined to be able to operate in accordance with each critical working point CWPⱼ in the set of critical working points {CWP₁, ...., CWPₙ}, determining a driveline model specific reference measure RMₖ, related to the operation of the driveline model DMₖ in each reference working point RWPᵢ in the set of reference working points {RWP₁, ...., RWPₘ}.

Thereafter, the driveline model specific reference measures RM_{g}, ... RMₗ(it should be noted that in second implementation, the driveline model specific reference measure is only determined if the driveline model is found to meet the critical working points requirement above) are assessed and a preferred, optionally the most preferred, model specific reference measure RMₖ is identified and therefrom the associated driveline model DMₖ is identified.

In a third non-limiting implementation, a complete set of driveline models {DM₁, ...., DMₚ} need not be generated firstly. Instead, in the third implementation, one or more initial driveline models DMₖ may be generated and for each one of the initial driveline models DMₖ the following is performed:
- determining whether or not the driveline model DMₖ is determined to be able to operate in accordance with each critical working point CWPⱼ in the set of critical working points {CWP₁, ...., CWPₙ}, and
- determining a driveline model specific reference measure RMₖ, related to the operation of the driveline model DMₖ in each reference working point RWPᵢ in the set of reference working points {RWP₁, ...., RWPₘ}.

In the third implementation, the driveline model specific reference measure RMₖ may be determined with the proviso that the associated driveline model DMₖ is found to meet the critical working points requirement as discussed hereinabove (as in the second implementation hereinabove). Alternatively, the driveline model specific reference measure RMₖ may be determined for each driveline model DMₖ (as in the first implementation hereinabove).

Irrespective of how the driveline model specific reference measures RMₖ are obtained, the third implementation may identify at least one driveline model DMₖ that is considered to be a suitable candidate for the driveline 12 (in terms of the driveline model specific reference measures RMₖ and the critical working points requirement as mentioned above). Thereafter, for the at least one driveline model DMₖ, an alternative driveline model DM'ₖ is generated wherein the unique selection of one or more component entities is altered as compared to the suitable candidate DMₖ. The alternative driveline model DM'ₖ is thereafter evaluated with respect to the driveline model specific reference measure RM'ₖ and the critical working points requirement as mentioned above. Should the alternative driveline model DM'ₖ be deemed to be more preferred than the at least one driveline model DMₖ that previously was considered to be a suitable candidate for the driveline 12, the alternative driveline model DM'ₖ takes the place of the least one driveline model DMₖ that previously was considered to be a suitable candidate for the driveline 12.

The above procedure may be continued until an appropriate driveline model DMₖ is identified. Purely by way of example, the above procedure according to the third implementation may be continued until the difference in the driveline model specific reference measure RMₖ associated with a suitable candidate DMₖ and the driveline model specific reference measure RM'ₖ associated with the alternative driveline model DM'ₖ is within a certain threshold range. Purely by way of example, the above procedure according to the third implementation may be continued until the absolute value of the difference in the driveline model specific reference measure RMₖ associated with a suitable candidate DMₖ and the driveline model specific reference measure RM'ₖ associated with the alternative driveline model DM'ₖ is lower than a predetermined threshold value.

As may be realized from the above, the features S14 and S16 may be implemented in a plurality of different ways and the above three implementations are only presented as implementation examples. It is envisaged that portions of the three implementations presented above may be combined so as to form further alternative implementations of features S14 and S16.

Embodiments of the method of the present invention using different entities for the driveline model specific reference measure RMₖ will be presented hereinbelow.

According to a first embodiment, the driveline model specific reference measure RMₖ may be indicative of the energy consumption associated with the operation of the driveline model DMₖ at each reference working point RWPᵢ in the set of reference working points {RWP₁, ...., RWPₘ}. Moreover, the method according to the first embodiment comprises setting the component types of the driveline to equal the unique selection of component entities for the component types corresponding to the driveline model DMₖ in the set of driveline models {DM₁, ...., DMₚ} which is associated with a lower energy consumption than at least a plurality of driveline models in the set of driveline models {DM₁, ...., DMₚ} which is determined to be able to operate in accordance with each critical working point CWPⱼ in the set of critical working points {CWP₁, ...., CWPₙ}.

Put differently, according to the first embodiment above, the method may set the component types of the driveline to equal the unique selection of component entities for the component types corresponding to the driveline model DMₖ in the set of driveline models which is associated with an appropriately low energy consumption.

It should be noted that the first embodiment of the method as presented above does not necessarily have to set the component types of the driveline to equal the unique selection of component entities for the component types corresponding to the driveline model DMₖ in the set of driveline models {DM₁, ...., DMₚ} which is associated with the lowest low energy consumption obtainable. Instead, the first embodiment of the method may use a driveline model DMₖ associated with an energy consumption being greater than the minimum attainable energy consumption.

However, in a variant of the first embodiment of method, the method comprises setting the component types of the driveline to equal the unique selection of component entities for the component types corresponding to the driveline model DMₖ in the set of driveline models {DM₁, ...., DMₚ} which is associated with the lowest energy consumption amongst driveline models DMₖ in the set of driveline models {DM₁, ...., DMₚ} which is determined to be able to operate in accordance with each critical working point CWPⱼ in the set of critical working points {CWP₁, ...., CWPₙ}.

It should be noted that the first embodiment of the method, or the variant of the first embodiment of method, as presented hereinabove may be implemented using any one of the first, second and third implementations of features S14 and S16 which have been presented hereinabove as well as any combination of the first, second and third implementations.

According to a second embodiment, the driveline model specific reference measure RMₖ may be indicative of a cost associated with the driveline model DMₖ in each reference working point RWPᵢ of the set of reference working points {RWP₁, ...., RWPₘ}. Moreover, the method according to the second embodiment may comprise setting the component types of the driveline to equal the unique selection of component entities for the component types corresponding to the driveline model DMₖ in the set of driveline models {DM₁, ...., DMₚ} which is associated with a lower cost than at least a plurality of driveline models in the set of driveline models {DM₁, ...., DMₚ} which is determined to be able to operate in accordance with each critical working point in the set of critical working points.

Put differently, according to the second embodiment above, the method may set the component types of the driveline to equal the unique selection of component entities for the component types corresponding to the driveline model DMₖ in the set of driveline models which is associated with an appropriately low cost.

It should be noted that the second embodiment of the method as presented above does not necessarily have to set the component types of the driveline to equal the unique selection of component entities for the component types corresponding to the driveline model DMₖ in the set of driveline models {DM₁, ...., DMₚ} which is associated with the lowest cost obtainable. Instead, the second embodiment of the method may use a driveline model DMₖ associated with an cost being greater than the minimum attainable cost.

However, in a variant of the second embodiment of method, the method comprises setting the component types of the driveline to equal the unique selection of component entities for the component types corresponding to the driveline model DMₖ in the set of driveline models {DM₁, ...., DMₚ} which is associated with the lowest cost amongst driveline models DMₖ in the set of driveline models {DM₁, ...., DMₚ} which is determined to be able to operate in accordance with each critical working point CWPⱼ in the set of critical working points {CWP₁, ...., CWPₙ}.

It should be noted that the second embodiment of the method, or the variant of the second embodiment of method, as present hereinabove may be implemented using any one of the first, second and third implementations of features S14 and S16 which have been presented hereinabove, as well as any combination of the first, second and third implementations.

As regards the cost associated with the driveline model DMₖ, the cost may for instance comprise a sum of:
- cost of energy consumption associated with the operation of the driveline model at each reference working point RWPᵢ of the set of reference working points {RWP₁, ...., RWPₘ}, and
- costs associated with manufacturing the driveline model DMₖ.

As such, the cost associated with the driveline model DMₖ may comprise a first portion that is dependent on the working points RWPᵢ and a second portion that is independent on the working points RWPᵢ.Purely by way of example, the costs associated with manufacturing the driveline model DMₖ may in turn comprise costs for purchasing and/or manufacturing each component entity for the component types corresponding to the driveline model DMₖ as well as costs for assembling the component entities so as to form the driveline 12.Moroever, it should be noted that, in embodiments of the method, the cost associated with the driveline model DMₖ may include service and maintenance costs and possibly also recycling costs.

Irrespective of the indication of the driveline model specific reference measure RMₖ, i.e. be it an indication of an energy consumption or a cost, in embodiments of the method, the feature of determining a driveline model specific reference measure RMₖ associated with the operation of the driveline model DMₖ in each reference working point RWPᵢ of the set of reference working points {RWP₁, ...., RWPₘ} may comprise associating each reference working point RWPᵢ with an expected frequency of occurrence fᵢ on the basis of data indicative of driving operations that the vehicle is intended to carry out.

Purley by way of example, the expected frequency of occurrence fᵢ may be expressed in terms of percentage of time that the driveline 12 is expected to operate in the reference working point RWPᵢ in view of the total operating time of the driveline 12. As another alternative, the expected frequency of occurrence fᵢ may be expressed in terms of percentage of time that the driveline 12 is expected to operate in the reference working point RWPᵢ in view of the aggregated operating time for the set of reference working points {RWP₁, ...., RWPₘ}.

As a nonlimiting example, the driveline model specific reference measure RMₖ associated with the operation of the driveline model DMₖ in each reference working point RWPᵢ of the set of reference working points {RWPi , RWPₘ} is determined by performing the following for each reference working point RWPᵢ of the set of reference working points {RWP₁, ...., RWPₘ}:
- determining a driveline model specific reference sub-measure RM_{k,i} associated with the reference working point RWPᵢ, and
- multiplying the driveline model specific reference sub-measure RM_{k,i} with the associated expected frequency of occurrence fᵢ in order to obtain a driveline model specific reference sub-measure product fᵢRM_{k,i},
wherein the driveline model specific reference measure RMₖ is the sum of the driveline model specific reference sub-measure products fᵢRM_{k,i}.

The above example can be employed for embodiments in which the driveline model specific reference measure RMₖ is indicative of the energy consumption, as well as for embodiments in which the driveline model specific reference measure RMₖ is indicative of the cost. As such, the driveline model specific reference sub-measure RM_{k,i} may be indicative of the energy consumption associated with the operation of the driveline model DMₖ in the reference working point RWPᵢ. Alternatively, the driveline model specific reference sub-measure RMₖ,ᵢ may be indicative of the cost associated with the operation of the driveline model DMₖ in the reference working point RWPᵢ.

It is to be understood that the present invention is not limited to the implementations described above and illustrated in the drawings; rather, the skilled person will recognize that many changes and modifications may be made within the scope of the appended claims.

## Claims

1. A method performed by a computer for configuring a driveline (12) for a vehicle (10), said driveline (12) comprising a plurality of component types (18, 18', 20, 22, 24, 30) adapted to operate together so as to produce propulsion power, said method comprising:
- determining a set of reference working points ({RWP₁, ...., RWPₘ}) for said vehicle (10) on the basis of data indicative of driving operations that the vehicle (10) is intended to carry out, each reference working point (RWPᵢ) being associated with an intended reference speed request as well as an associated intended reference torque request for said vehicle (10), and
- determining a set of critical working points ({CWP₁, ...., CWPₙ}) for said vehicle (10), each critical working point (CWPⱼ) being associated with an intended critical speed request as well as an associated intended critical torque request, wherein said intended critical torque request is greater than an intended average torque request for said vehicle (10),
said method further comprising establishing a set of driveline models ({DM₁, ...., DMₚ}) for said driveline (12), each driveline model (DMₖ) comprising a unique selection of component entities for the component types (18, 18', 20, 22, 24, 30) comprised in said driveline (12) such that each driveline model (DMₖ) in said set of driveline models is different from the other driveline models in said set of driveline models ({DM₁, ...., DMₚ}),
said method further comprising setting the component types (18, 18', 20, 22, 24, 30) of said driveline to equal the unique selection of component entities for the component types (18, 18', 20, 22, 24, 30) corresponding to the driveline model (DMₖ) in said set of driveline models ({DM₁, ...., DMₚ}) which:
- is determined to be able to operate in accordance with each critical working point (CWPⱼ) in said set of critical working points ({CWP₁, ...., CWPₙ}), and
- is associated with a driveline model specific reference measure (RMₖ), related to the operation of said driveline model at each reference working point (RWPᵢ) of said set of reference working points ({RWP₁, ...., RWPₘ}), being deemed more preferred than the driveline model specific reference measure (RMₖ) associated with at least a subset of the other driveline models.

2. The method according to claim 1, where said set of reference working points ({RWP₁, ...., RWPₘ}) is representative of the driving operations during at least 50%, preferably at least 70%, more preferred at least 80%, of the intended operation time of said vehicle (10).

3. The method according to claim 1 or claim 2, wherein said driveline model specific reference measure (RMₖ) is indicative of the energy consumption associated with the operation of said driveline model (DMₖ) at each reference working point (RWPᵢ) of said set of reference working points ({RWP₁, ...., RWPₘ}) and wherein said method comprises setting the component types (18, 18', 20, 22, 24, 30) of said driveline to equal the unique selection of component entities for the component types (18, 18', 20, 22, 24, 30) corresponding to the driveline model (DMₖ) in said set of driveline models ({DM₁, ...., DMₚ}) which is associated with a lower energy consumption than at least a plurality of driveline models in said set of driveline models ({DM₁, ...., DMₚ}) which is determined to be able to operate in accordance with each critical working point (CWPⱼ) in said set of critical working points ({CWP₁, ...., CWPₙ}), preferably said method comprising setting the component types (18, 18', 20, 22, 24, 30) of said driveline to equal the unique selection of component entities for the component types (18, 18', 20, 22, 24, 30) corresponding to the driveline model (DMₖ) in said set of driveline models ({DM₁, ...., DMₚ}) which is associated with the lowest energy consumption amongst driveline models in said set of driveline models ({DM₁, ...., DMₚ}) which is determined to be able to operate in accordance with each critical working point (CWPⱼ) in said set of critical working points ({CWP₁, ...., CWPₙ}).

4. The method according to claim 1 or claim 2, wherein said driveline model specific reference measure (RMₖ) is indicative of a cost associated with said driveline model (DMₖ) at each reference working point (RWPᵢ) of said set of reference working points ({RWP₁, ...., RWPₘ}) and wherein said method comprises setting the component types (18, 18', 20, 22, 24, 30) of said driveline to equal the unique selection of component entities for the component types (18, 18', 20, 22, 24, 30) corresponding to the driveline model (DMₖ) in said set of driveline models ({DM₁, ...., DMₚ}) which is associated with a lower cost than at least a plurality of driveline models in said set of driveline models ({DM₁, ...., DMₚ}) which is determined to be able to operate in accordance with each critical working point (CWPⱼ) in said set of critical working points ({CWP₁, ...., CWPₙ}), preferably said method comprising setting the component types (18, 18', 20, 22, 24, 30) of said driveline to equal the unique selection of component entities for the component types (18, 18', 20, 22, 24, 30) corresponding to the driveline model (DMₖ) in said set of driveline models ({DM₁, ...., DMₚ}) which is associated with the lowest cost amongst driveline models in said set of driveline models ({DM₁, ...., DMₚ}) which is determined to be able to operate in accordance with each critical working point (CWPj) in said set of critical working points ({CWP₁, ...., CWPₙ}).

5. The method according to claim 4, wherein said cost associated with said driveline model (DMₖ) comprises a sum of:
- cost of energy consumption associated with the operation of said driveline model (DMₖ) at each reference working point (RWPᵢ) of said set of reference working points ({RWP₁, ...., RWPₘ}), and
- costs associated with manufacturing said driveline model (DMₖ).

6. The method according to any one of the preceding claims, wherein said step of determining a driveline model specific reference measure (RMₖ) associated with the operation of said driveline model at each reference working point (RWPᵢ) of said set of reference working points ({RWP₁, ...., RWPₘ}) comprises associating each reference working point (RWPᵢ) with an expected frequency of occurrence (fᵢ) on the basis of data indicative of driving operations that the vehicle (10) is intended to carry out.

7. The method according to claim 6, wherein said driveline model specific reference measure (RMₖ) associated with the operation of said driveline model (DMₖ) at each reference working point (RWPᵢ) of said set of reference working points ({RWP₁, ...., RWPₘ}) is determined by performing the following for each reference working point (RWPᵢ) of said set of reference working points ({RWP1, ...., RWPₘ}):
- determining a driveline model specific reference sub-measure (RM_{k,i}) associated with the reference working point (RWPᵢ), and
- multiplying the driveline model specific reference sub-measure (RM_{k,i}) with the associated expected frequency of occurrence (fᵢ) in order to obtain a driveline model specific reference sub-measure product (fᵢRM_{k,i}),
wherein said driveline model specific reference measure (RMₖ) is the sum of said driveline model specific reference sub-measure products (fᵢRM_{k,i}).

8. The method according to claim 7, wherein said driveline model specific reference sub-measure (RMₖ,ᵢ) is indicative of the energy consumption associated with the operation of said driveline model (DMₖ) at said reference working point (RWPᵢ).

9. The method according to claim 7, wherein said driveline model specific reference sub-measure (RM_{k,i}) is indicative of the cost associated with the operation of said driveline model (DMₖ) at said reference working point (RWPᵢ).

10. The method according to any one of the preceding claims, wherein said plurality of component types (18, 18', 20, 22, 24, 30) adapted to operate together so as to produce propulsion power comprises one or more of the following component types: a propulsion unit, a gearbox, a rear axle and one or more wheels.

11. The method according to any one of the preceding claims, wherein a ratio between said intended reference speed request and an intended average speed request for said vehicle (10) is in the range of 0.6 - 1.4, preferably in the range of 0.8 - 1.2, for each reference working point (RWPᵢ) in said set of reference working points ({RWP₁, ...., RWPₘ}).

12. The method according to any one of the preceding claims, wherein a ratio between said intended critical torque request and intended average torque request for said vehicle (10) is at least 2, preferably at least 3, for each critical working point (CWPⱼ) in said set of critical working points ({CWP₁, ...., CWPₙ}).

13. The method according to any one of the preceding claims, wherein each reference working point (RWPᵢ) in said set of reference working points ({RWP₁, ...., RWPₘ}) is determined on the basis of information comprising at least an intended speed and an intended cargo load of said vehicle (10) adapted to host said driveline (12).

14. The method according to any one of the preceding claims, wherein each reference working point (RWPᵢ) in said set of reference working points ({RWP₁, ...., RWPₘ}) has a single operation condition for said driveline (12).

15. The method according to any one of the preceding claims, wherein said set of reference working points ({RWP₁, ...., RWPₘ}) consists of less than seven, preferably less than five, more preferred less than three, reference working points (RWPᵢ).

16. The method according to any one of the preceding claims, wherein said set of critical working points ({CWP₁, ...., CWPₙ}) consists of less than seven, preferably less than five, more preferred less than three, critical working points (CWPⱼ).

17. The method according to any one of the preceding claims, wherein said vehicle (10) is a ground vehicle, preferably said vehicle (10) is a commercial ground vehicle such as a truck.

18. A computer program comprising program code means for performing the method of any of claims 1 - 17 when said program is run on a computer.

19. A computer readable medium carrying a computer program comprising program code means for performing the method of any of claims 1 - 17 when said program is run on a computer.
